# EUROPEAN PATENT SPECIFICATION

(11) **EP 3 878 118 B1**
(45) Date of publication and mention of the grant of the patent: **21.08.2024**
(21) Application number: 18799720.0
(22) Date of filing: 06.11.2018
(51) Int. Cl.: H04L 1/1867, H04W 36/00, H04W 36/08

(54) **COORDINATED RESOURCE RESERVATION FOR ULTRA-RELIABLE LOW LATENCY COMMUNICATION**
KOORDINIERTE RESSOURCENRESERVIERUNG FÜR EXTREM ZUVERLÄSSIGE KOMMUNIKATION MIT NIEDRIGER LATENZZEIT
RÉSERVATION DE RESSOURCES COORDONNÉES POUR UNE COMMUNICATION À FAIBLE LATENCE ULTRA-FIABLE

(43) Date of publication of application: 15.09.2021
(73) Proprietor: Nokia Solutions and Networks Oy, 02610 Espoo (FI)
(72) Inventor: PEDERSEN, Klaus Ingemann, 9000 Aalborg (DK); KOLDING, Troels Emil, 9270 Klarup (DK)
(74) Representative: Mudge, Kevin
(86) International application number: PCT/EP2018/080244
(87) International publication number: WO 2020/094210

(56) References cited:
- EP-A1- 2 387 269
- EP-A1- 2 436 208
- WO-A1-2017/105151
- US-A1- 2008 305 799
- US-A1- 2017 215 119
- KT CORP: "Discussion on Inter DU mobility", vol. RAN WG2, no. Vancouver, Canada; 20180122 - 20180126, 12 January 2018 (2018-01-12), XP051386669, Retrieved from the Internet <URL:http://www.3gpp.org/ftp/tsg%5Fran/WG2%5FRL2/TSGR2%5FAHs/2018%5F01%5FNR/Docs/> [retrieved on 20180112]

## Description

### Field

The present application relates to a method, apparatus, system and computer program and in particular but not exclusively to coordinated semi-persistent scheduling (SPS) reservation for ultra-reliable low latency communications use cases such as time sensitive networking (TSN) streams in 5G new radio (NR).

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data, critical system messages between an actuator and a controller, critical sensor data (such as measurements, video feed etc.) towards a control system and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

Some related prior art is:
WO 2017/105151 A1 discloses a method for determining validity of semi-persistent scheduling resource across multiple cells in wireless communication system by user equipment determines whether semi-persistent scheduling resource configuration is valid or not based on time information.
EP 2 387 269 A1 relates to the radio communication field and discloses a method, an apparatus, and a system for handover between multi-carrier cells, so that a user equipment can be handed over to carriers of different cells on multiple target evolved NodeBs. The handover method includes: after performing handover request acknowledge, receiving serial numbers of data to be transferred and identifier information of target evolved NodeBs of other carriers to which the user equipment is handed over sent by a source evolved NodeB; and transferring scheduling information to the target evolved NodeBs of other carriers to which the user equipment is handed over.
US 2017/215119 A1 anticipates methods and apparatuses for controlling the mobility of a user equipment for performing mobile communication network-based Vehicle To Everything. For example, a handover method may be provided for a user equipment for performing Vehicle To Everything communication. The handover method may includes receiving synchronization type information for the Vehicle to Everything communication from a source base station, and configuring a synchronization type, receiving, from the source base station, handover command information including resource configuration information for the Vehicle to Everything communication which is configured by a target base station; and performing the Vehicle to Everything communication until completion of a handover to the target base station by using the resource configuration information.
EP 2 436 208 A1 describes methods and arrangements in a node in a wireless communication system for managing user equipment access to the target node. The wireless communication system comprises the target node, a source node, a core network node and a user equipment. The user equipment is configured for wireless communication over a bearer with the source node and for performing a handover from the source node to the target node. The method comprises receiving a bearer request associated with the user equipment, obtaining a time information parameter associated with the queuing time of the bearer request in at least the source node, checking if communication resources are available for establishing a bearer with the user equipment. If communication resources are not available, the bearer request is placed in a priority queue, based on the received time information parameter.
US 2008/305799 A1 discloses methods and mechanisms for enhancing heterogeneous media independent handover between different link layer technologies. The methods and mechanisms include using a media independent handover proxy entity, network controller capable of a media independent handover, and an media independent handover server. Enhancements are made to the query phase, preparation phase, execution phase and completion phase by including required information in media independent handover messages.

KT CORP: "Discussion on Inter DU mobility", 3GPP DRAFT R2-1801241 of January 12, 2018 discusses some issues on inter DU mobility with the CU DU split architecture consisting of centralized PDCP/RRC and decentralized RLC/MAC/PHY.

### Summary

In a first aspect there is provided an apparatus according to claim 1.

In a second aspect, there is provided a method according to claim 9.

In a fourth aspect there is provided a computer readable medium according to claim 10.

### Description of Figures

Embodiments will now be described, by way of example only, with reference to the accompanying Figures in which:
Figure 1 shows a schematic diagram of an example communication system comprising a base station and a plurality of communication devices;
Figure 2 shows a schematic diagram of an example mobile communication device;
Figure 3 shows a schematic diagram of an example control apparatus;
Figure 4 shows a schematic diagram of an example 5G network architecture;
Figure 5 shows a flowchart of a method according to an example embodiment;
Figure 6 shows a signalling flow in an example embodiment;
Figure 7 shows a signalling flow in an example embodiment.

### Detailed description

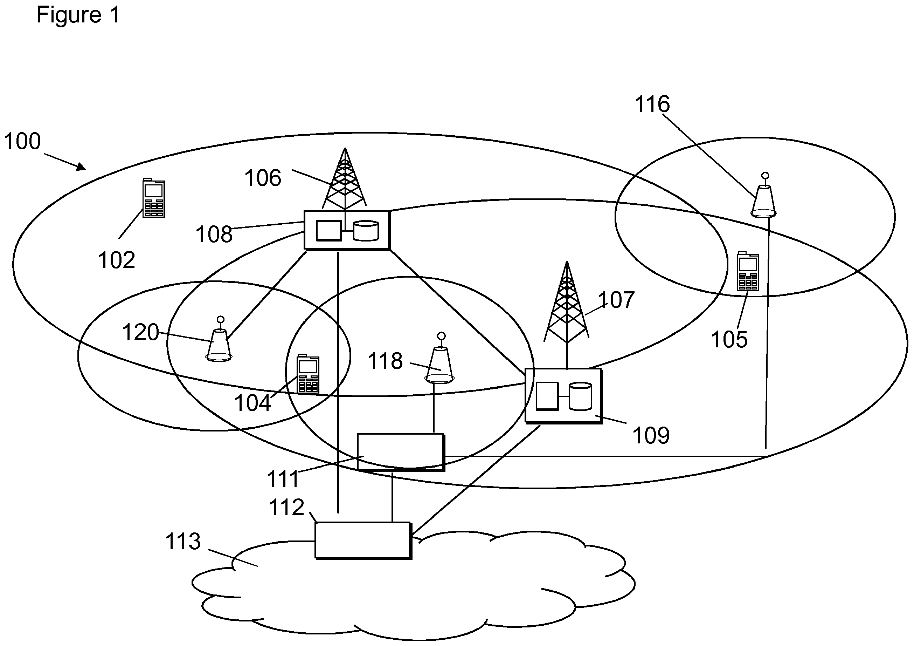

Before explaining in detail the examples, certain general principles of a wireless communication system and mobile communication devices are briefly explained with reference to Figures 1 to 3 to assist in understanding the technology underlying the described examples.

In a wireless communication system 100, such as that shown in figure 1, mobile communication devices or user equipment (UE) 102, 104, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatuses. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as wireless local area network (WLAN) and/or WiMax (Worldwide Interoperability for Microwave Access). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-advanced. Base stations of NR systems may be known as next generation Node Bs (gNBs). Changes to the network architecture may depend on the need to support various radio technologies and finer Quality of Service (QoS) support, and some on-demand requirements for e.g. QoS levels to support QoE of user point of view. Also network aware services and applications, and service and application aware networks may bring changes to the architecture. Those are related to Information Centric Network (ICN) and User-Centric Content Delivery Network (UC-CDN) approaches. NR may use multiple input- multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UE(s) exchanging traffic with the DN.

The UPF is controlled by an SMF (Session Management Function) that receives policies from a PCF (Policy Control Function). The CN may also include an AMF (Access & Mobility Function).

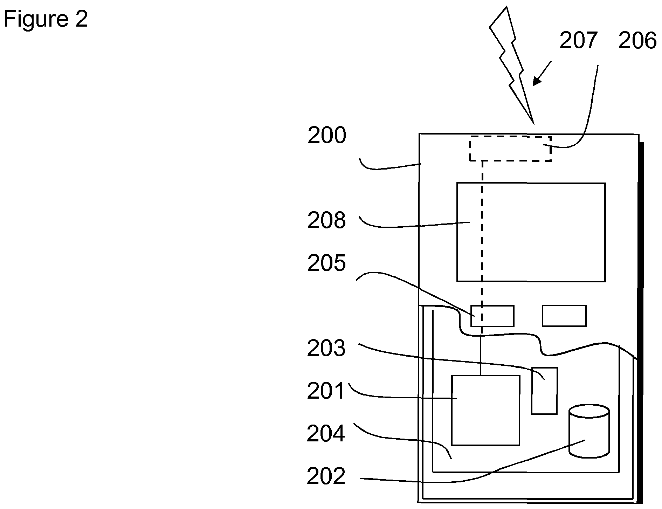

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information. A communication device may be provided by a modem (e.g. for factory automation functionalities; to enable wireless control on factory production modules, robots, etc.) . In an industrial automation setting, a communication device may be integrated into an actuator such as a robot arm and/or act as a hub for multiple actuators connected to it. Data content in an industrial setting may include critical system messages between an actuator and a controller, critical sensor data (such as measurements, video feed etc.) towards a control system

A communication device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The communication device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

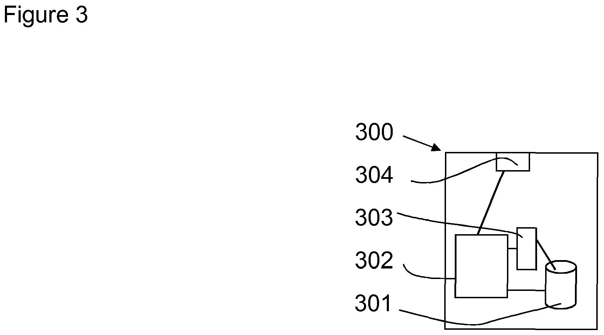

Figure 3 shows an example of a control apparatus for a communication system, for example to be coupled to and/or for controlling a station of an access system, such as a RAN node, e.g. a base station, eNB or gNB, a relay node or a core network node such as an MME or S-GW or P-GW, or a core network function such as AMF/SMF, or a server or host. The method may be implanted in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

There is a focus on leveraging 5G NR technology in an industrial setting, e.g. within the domain of Industrial Wireless Ethernet. This may require isochronous or hard real-time behaviour over the complete 5G NR RAN and core.

In Industrial Ethernet, strict time domain resource reservations are currently the norm. Strict time domain resource reservations may simplify devices and provide consistent non-jitter delay without collisions. This has led to standards such as the IEEE Time-Sensitive Networking (TSN). Similar approaches are being discussed for deterministic multi-hop and IP connections, e.g., IETF Deterministic Networking (DetNet).

In the Wireless Domain, one option to serve devices with a fixed and very low cycle-time is to perform semi-persistent resource allocations over the network. The data allocation for such devices are very low; in IEEE TSN, typical data allocation sizes are often on the order of 64 Bytes.

The 5G network may have strict requirements related to time-sensitive flows, e.g. a given cyclic time sensitive flow must be transmitted exactly at a given time boundary with microsecond resolution. Those requirements may be achieved from interactions with an external industrial control system (for example the Centralized Network Configuration (CNC) or Centralized User Configuration (CUC) in IEEE TSN) or by other means.

Given these requirements for TSN, and the fact that TSN traffic is typically periodic, enhanced semi-persistent scheduling (SPS) solutions for TSN radio resource allocation may be considered.

3GPP NR Rel-15 standardization has introduced a number of ultra-reliable low latency communication (URLLC) enablers, focusing on being able to fulfil the ITU-2020 requirements, itemized in 3GPP TS 38.913. However, those Rel-15 solutions may not be sufficient to support TSN.

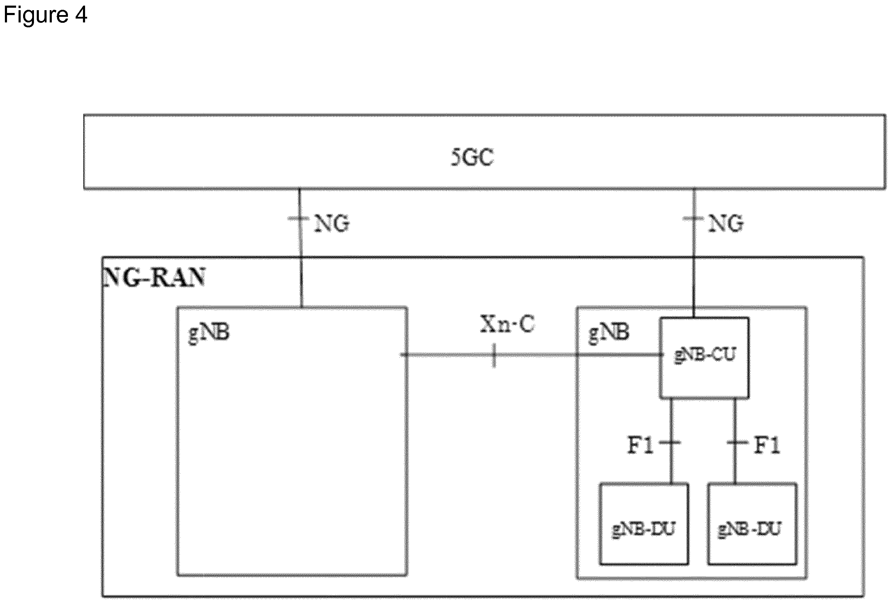

Figure 4 shows a schematic diagram of example 5G NR network architecture. The example network includes a 5G core network (5GC) and two gNBs. An Xn-C interface is provided between the gNBs to coordinate the XnAP procedures as defined in 3GPP TS 38.423. An NG interface towards the 5G core network (5GC or CN) from the gNBs is provided.

The 5G NR architecture allows centralised radio access networks (C-RAN) implementations with one or multiple centralized units (CU) in a gNB, each serving a large number of distributed units (DU), as discussed above. This is illustrated in Figure 4. Such CU-DU options are made possible by the interfaces E1 (between the control and user plane in the CU) and F1 (between the CU and DU). The E1 interface is specified in TS 38.460 (Stage 2); TS 38.463 (Stage-3). The F1 interface is specified in TS 38.470 (Stage 2); TS 38.473 (Stage 3).

Which of the available architecture options is implemented and deployed is network vendor/operator dependent. In locations with availability of fiber connections, one CU may be set to serve a large number of DUs, e.g. many DUs in a production facility where fulfilling TSN requirements is of relevance.

When an end to end (E2E) session with a UE is setup, the setup involves signalling between 5GC and the involved gNB(s) as well as between the gNB(s) and UE. The gNB receives 5G QoS class indices (5QI) from the 5GC. As defined in 3GPP TS 23.501, the 5QI contains a set of default QoS parameters for a large number of services, covering various enhanced mobile broadband (eMBB), URLLC, and massive machine type communications (mMTC) use cases. The QoS parameters in the 5QI table include resource type (guaranteed bit rate (GBR), delay critical GBR, and non-GBR), priority, packet delay budget, packet error rate, and averaging window. It is therefore assumed that the 5QI table may contain information to identify that a certain traffic flow is TSN traffic with certain traffic periodicity, jitter, etc. requirements.

The gNB will map one or more QoS flows to an E2E session. The mapping is conducted at the Service Data Adaptation Protocol (SDAP) protocol layer in the gNB, (see 3GPP TS 37.324). The mapping is based on the 5QI in the transport header of the packets, and on corresponding QoS parameters, which may be signalled via CN interface when a packet session is established. At least one default data radio bearer (DRB) is established for each UE when a new E2E packet session is created. For TSN traffic, it is assumed that enhanced SPS is used to allocate strictly periodic "protected" radio resources for the gNB-UE communication.

5G NR utilises network controlled (but UE assisted) handovers as in LTE. That is, handover of one UE from its current source cell to a new target cell may be triggered by UE RRM measurements. Upon reception of such a trigger, the source cell decides if a handover shall be made. The source cell consults the target cell (e.g. via Xn or E1 procedures) for acceptance that the UE can transferred to the target cell.

Once agreed between the source and target cell, the source cell sends a RRC handover command to the UE (RRC reconfiguration message). After handover complete (i.e. RRC reconfiguration complete) in the target cell, path switching towards the 5GC may be performed. The currently defined 3GPP NR Rel-15 defined handover may not fulfil the service requirements for TSN.

Mobility is a requirement for a TSN UE, with speeds of up to 20 m/s. With small cells, fast mobility, and reliability requirement of 5-8x 9s, there may be no room to release SPS resources or to allow temporarily conflicts/collisions between resource allocations for TSN UEs. Thus, a gNB that is a potential target gNB for the TSN UE may have already made SPS reservations for other users that conflict with the required SPS needed for the incoming TSN UE and should be avoided. Otherwise, if such resources are already in use in the target eNB, the handover will fail from a QoS perspective.

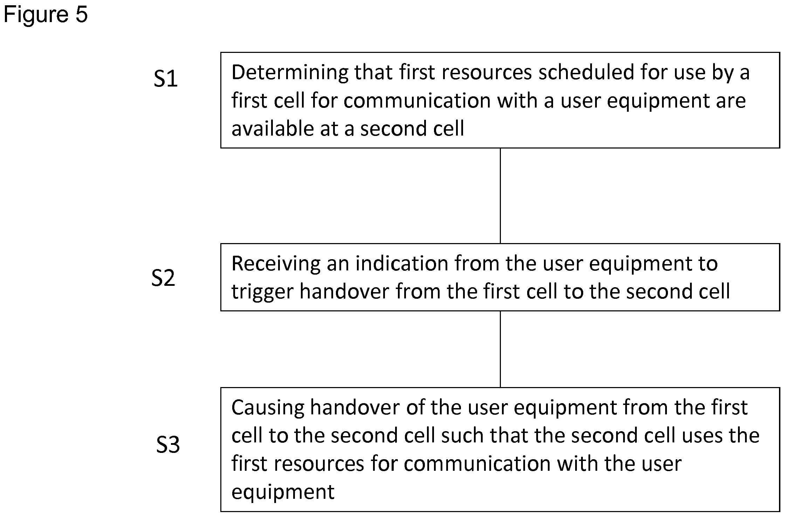

Figure 5 shows a flowchart of a method according to an example embodiment.

In a first step, S1 the method determining, at a first network entity, that first resources scheduled for use by a first cell for communication with a UE are available at a second cell.

In a second step, S2, the method comprises receiving an indication from the UE to trigger handover from the first cell to the second cell.

In a third step, S3, the method comprises causing handover of the UE from the first cell to the second cell such that the second cell uses the first resources for communication with the UE.

Communication with the UE may comprise the UE receiving and/or transmitting TSN traffic.

The first resources may comprises SPS resources. The SPS resources may be defined as a resource allocation pattern.

The resource allocation may be in the time domain. As long as different TSN flows may be multiplexed in the frequency domain, TSN flows may share the time-domain resource allocation without conflicts. For example, after a handover, a UE may be moved to a different frequency allocation as long as the same time domain resources are used. Hence, the resource allocation pattern may have strict absolute timing information.

The method may ensure that a SPS resource allocation pattern in one cell for a UE (in line with the UE's TSN requirements) is available in a neighboring cell, should a handover take place. The method may be applied to a distributed architecture by introducing procedure for the NG and Xn interfaces or a centralized network architecture by introducing procedures for the NG and E1/F1 interfaces.

The method may comprise receiving an indication of mobility. The indication of mobility behaviour may be received from a core network entity. For example, information may be appended in the signaling from the 5GC to a gNB to inform the gNB of the level of mobility for the TSN communication device (and the TSN flows terminated through that communication device). This may be expressed as {static with no mobility ; full mobility}. The indication of mobility may comprise an indication of at least one potential target cell. For example, in the case of mobility, the level of mobility may be expressed as a set of cells where the UE may move. The indication of mobility may be fully or partly included in the 5QI Table as new entries to support TSN use cases.

Conflict resolution Xn procedures may be introduced to handle potential conflicts where neighboring cells may compete for colliding time-domain/frequency-domain resources for TSN UEs.

For a distributed network architecture where the first cell comprises a first base station (e.g. gNB) and the second cell comprises a second base station (e.g. gnB), the method comprises providing a request from the first base station to the second base station whether the first resources are available and receiving a response at the first base station indicating that the first resources are available.

Before a gNB configures a SPS pattern for a TSN UE (in line with the QoS requirements as per the 5QI), the gNB consults neighbouring cell(s) via Xn procedures to minimize the probability that the same time-domain pattern is used in those cells.

Alternatively, or in addition, when a gNB configures a SPS pattern for a TSN UE, the gNB may inform neighbouring cell(s) of the SPS pattern to minimize the probability that the neighbouring cells configure colliding time-domain SPS resources for other TSN-UEs. That is, the method may comprise providing an indication of the first resources (e.g. SPS pattern) from the first base station to the second base station.

The indication of the resources may include timing information. When a gNB informs a neighbouring gNB (e.g. via Xn) of the SPS pattern it will use (or is considering using) for a given UE, the gNB may provide the neighbouring gNB with accurate information of the absolute timing on this SPS pattern. The gNBs may have a mutual understanding of timing. For centralized network architectures, similar solutions as those above may be introduced for the E1 and F1 interface.

Causing handover may comprise providing a handover command to the user equipment. The handover command may comprise an indication of the first resources. For example, upon handover of a TSN UE with a configured SPS resource allocation pattern in its current source cell, the handover command (e.g. RRC reconfiguration message) may be extended to include information indicating which SPS pattern the TSN UE will continue to use in the target cell. The information may comprise accurate timing information for the SPS pattern that the UE shall be using in the target cell upon the cell change. A UE may then be considered as essentially pre-scheduled (resource allocation assignment) for the target cell, such that any delays for the target cell to schedule the UE (i.e. configure it with new SPS pattern) may be avoided

Given the strict timing/jitter requirements for TSN use cases, the extended message information may include an indication to continue to use the same time-domain SPS pattern, but with potential modifications to the frequency domain (i.e. PRB) allocations. By including such options, we avoid having to configure new SPS pattern for the TSN UE after it has successfully completed (i.e. upon RRC reconfiguration complete) handover to the target cell.

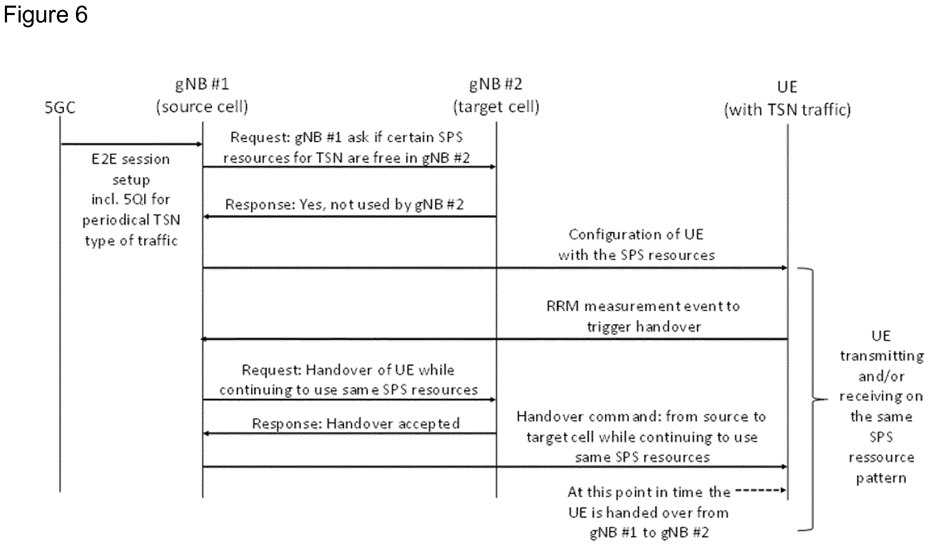

Figure 6 illustrates a signalling flow for an implementation of the method in a distributed network architecture.

First a new E2E session with periodic TSN type of traffic is setup from the 5GC, signaled through the NG to gNB #1 that is serving the UE. The signalling from the 5GC includes the 5QI. In this example, the signalling includes an indication that the UE is mobile.

Based on the 5QI, gNB #1 determines a SPS resource allocation pattern for the TSN traffic to/from the UE with an accurate absolute timing in line with the service requirements (e.g. as per the 5QI). Before gNB #1 configures the UE with the determined SPS pattern, it consults a neighboring gNB #2, requesting feedback if gNB #2 is using the same SPS pattern (with the same absolute timing) for other high priority TSN type of traffic connections. That is, gNB #1 provides a request to gNB#2 if resources are available. If gNB #2 responds that the determined SPS pattern is not used for similar priority traffic elsewhere (i.e. that the resources are available) gNB #1 configures the UE with the desired SPS resource pattern.

Subsequently, the UE triggers handover by returning a RRM measurement event, indicating that handover to gNB #2 is desirable. gNB #1 causes handover by deciding to act on the RRM measurement event, and requesting handover with gNB #2, while continuing to use the same SPS resources pattern as configured in its current source cell. gNB #2 accepts the request, and gNB #1 sends an extended handover command to the UE; causing the UE to handover to the target cell on gNB #2, while continuing to use the same SPS pattern after the handover with the same absolute timing.

The handover command from gNB #1 to the UE may include instructions to cause the UE to be simultaneously served by the source and target cell for a short time period during the handover transition on the same SPS pattern as first configured for the UE. This may be achieved using coherent or non-coherent CoMP transmission/reception, or PDCP type of dual connectivity with data duplication.

In the example illustrated in Figure 6, gNB #2 indicates that the resources are available as a reply to the request from gNB #1 on using a certain SPS resource pattern. However, it may also happen that the SPS resource pattern that gNB #1 first wants to use collides with another SPS pattern used by gNB #2. If such situations occur, the response from gNB #2 may be extended to include a suggestion for the closest possible non-colliding SPS resource allocation pattern that gNB #1 could use. That is, if the resources are not available, the method may comprise receiving an indication of other resources which are available.

For example, gNB #1 asks if a certain SPS resource allocation pattern with a given absolute time-pattern on PRBs 0-10 is free in gNB #2. gNB #2's response indicates that the resource pattern is in use (i.e. that the resources are not available). gNB #2 then indicates that an SPS resource allocation pattern with the given absolute time-pattern on PRBs 11-90 is free in gNB #2.

The method comprises, if the first resources are scheduled for use by the second cell for lower priority traffic, receiving an indication that the first resources are available. After information exchange between gNB #1 and gNB #2 (i.e. to find valid non-colliding SPS pattern for gNB #1 to use for its high priority TSN UE), the scheme in Figure 6 may be extended so that gNB #1 informs gNB #2 of its selection of SPS pattern, and gNB #2 would then use such information to avoid allocating other high priority users on those resources.

Also, if SPS pattern is already in use by gNB#2 but by lower priority traffic, there may be rules that gNB#2 needs to respond that SPS resource allocation pattern is acceptable and that it then needs to reschedule its lower priority SPS user to another non-conflicting physical resource allocation.

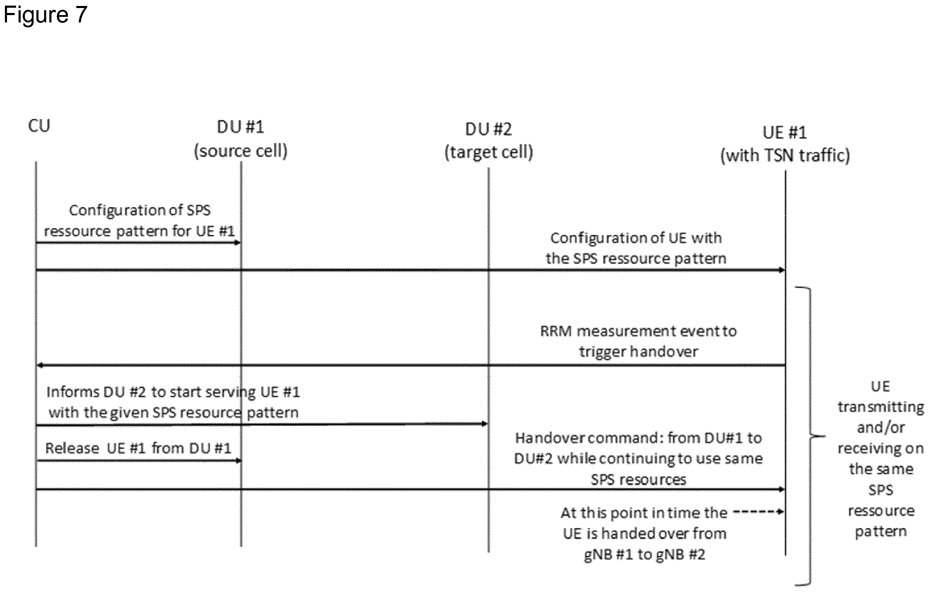

While the example of Figure 6 was for the distributed network architecture, Figure 7 illustrates a possible implementation for the centralized case.

For the TSN requirements, the centralised case may be a preferred use-case since it does not involve Xn communications.

In this example, the CU knows SPS allocations to all UEs that are served by DUs (cells) under the CU's control. The CU is therefore in a position to coordinate SPS resource allocation patterns for high priority TSN UEs so that it can determine that first resources scheduled for use by a first cell for communication with a user equipment are available at a second cell. Hence, there is a minimum probability of colliding between different DUs/Cells.

Accurate SPS resource allocation patterns with well-defined absolute timing are configured with RRC signalling (RRC sits in the CU). Hence, as illustrated in Figure 7, when the CU decides to setup a SPS resource allocation pattern for new high priority TSN users, it first determines (using, for example a vendor specific algorithm) an SPS pattern to use.

Once the CU has determined the SPS resource allocation pattern for the UE, it informs the UE #1 and DU #1 (i.e. via E1 and F1 signaling).

During the call, UE #1 may send a RRM measurement reporting event to indicate need for handover. The RRM measurement reporting event is terminated in the CU as it is sent as a RRC message. Upon reception of the RRM reporting event, the CU act and initiates the handover. This is done by signalling to DU #1, DU #2 and UE #1. The CU informs the UE #1, DU #1 and DU #2 that that UE #1 is handed over from DU #1 to DU #2, while continuing to use the exactly same SPS resource allocation pattern.

The method is implemented in a user equipment as described with reference to Figure 2 or a control apparatus as described with reference to figure 3. An apparatus comprises means for determining that first resources scheduled for use by a first cell for communication with a user equipment are available at a second cell, receiving an indication from the user equipment to trigger handover from the first cell to the second cell and causing handover of the user equipment from the first cell to the second cell such that the second cell uses the first resources for communication with the user equipment.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to TSN, similar principles can be applied in relation to other URLLC networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An apparatus, said apparatus comprising means for, at a first network entity, determining that first resources scheduled for use by a first cell for communication with a user equipment are available at a second cell before configuring the user equipment with the first resources used for communication at the first cell;
receiving an indication from the user equipment to trigger handover from the first cell to the second cell; and
causing handover of the user equipment from the first cell to the second cell such that the second cell uses the first resources for communication with the user equipment, wherein the first cell comprises a first base station, the second cell comprises a second base station and the first base station comprises the first network entity, wherein means for determining that first resources scheduled for use by the first cell for communication with the user equipment are available at the second cell comprises means for providing a request from the first base station to the second base station whether the first resources are available and receiving a response at the first base station indicating that the first resources are available, the apparatus comprising means for, if the first resources are scheduled for use by the second cell for lower priority traffic, receiving, from the second base station in response to the request, an indication that the first resources are available.

2. An apparatus according to claim 1, comprising means for receiving, at the first network entity, an indication of mobility for the user equipment.

3. An apparatus according to claim 2, wherein the indication of mobility comprises an indication of at least one potential target cell.

4. An apparatus according to any of claims 1 to 3, wherein means for causing handover comprises means for providing a handover command to the user equipment, the handover command comprising an indication of the first resources.

5. An apparatus according to claim 1, comprising means for providing an indication of the first resources to the second base station.

6. An apparatus according to any of claims 1 to 5, wherein the first resources are semi persistent scheduling resources.

7. An apparatus according to any of claims 1 to 6, wherein the first resources comprise time domain resources.

8. An apparatus according to any of claims 1 to 7, wherein the communication with a user equipment comprises time sensitive networking traffic.

9. A method performed by a first network entitiy, the method comprising determining that first resources scheduled for use by a first cell for communication with a user equipment are available at a second cell before configuring the user equipment with the first resources used for communication at the first cell; receiving an indication from the user equipment to trigger handover from the first cell to the second cell; and causing handover of the user equipment from the first cell to the second cell such that the second cell uses the first resources for communication with the user equipment, wherein the first cell comprises a first base station, the second cell comprises a second base station and the first base station comprises the first network entity, wherein determining that first resources scheduled for use by the first cell for communication with the user equipment are available at the second cell comprises providing a request from the first base station to the second base station whether the first resources are available and receiving a response at the first base station indicating that the first resources are available, the method further comprising, if the first resources are scheduled for use by the second cell for lower priority traffic, receiving, from the second base station in response to the request, an indication that the first resources are available.

10. A computer readable medium comprising program instructions, which when executed by an apparatus, cause the apparatus to perform at least the following:
determining that first resources scheduled for use by a first cell for communication with a user equipment are available at a second cell before configuring the user equipment with the first resources used for communication at the first cell;
receiving an indication from the user equipment to trigger handover from the first cell to the second cell; and
causing handover of the user equipment from the first cell to the second cell such that the second cell uses the first resources for communication with the user equipment, wherein the first cell comprises a first base station, the second cell comprises a second base station and the first base station comprises the first network entity, wherein determining that first resources scheduled for use by the first cell for communication with the user equipment are available at the second cell comprises providing a request from the first base station to the second base station whether the first resources are available and receiving a response at the first base station indicating that the first resources are available, and if the first resources are scheduled for use by the second cell for lower priority traffic, receiving, from the second base station in response to the request, an indication that the first resources are available.

## Patentansprüche

1. Vorrichtung, wobei die Vorrichtung Mittel zum Bestimmen an einer ersten Netzwerkentität, dass erste Ressourcen, die zur Verwendung durch eine erste Zelle für eine Kommunikation mit einer Teilnehmereinrichtung geplant sind, an einer zweiten Zelle verfügbar sind, bevor die Teilnehmereinrichtung mit den ersten Ressourcen ausgelegt wird, die für eine Kommunikation an der ersten Zelle verwendet werden;
Empfangen einer Anzeige zum Auslösen einer Übergabe von der ersten Zelle an die zweite Zelle von der Teilnehmereinrichtung; und
Veranlassen einer Übergabe der Teilnehmereinrichtung von der ersten Zelle an die zweite Zelle, derart, dass die zweite Zelle die ersten Ressourcen für eine Kommunikation mit der Teilnehmereinrichtung verwendet, wobei die erste Zelle eine erste Basisstation umfasst, die zweite Zelle eine zweite Basisstation umfasst und die erste Basisstation die erste Netzwerkentität umfasst, wobei Mittel zum Bestimmen, dass erste Ressourcen, die zur Verwendung durch die erste Zelle für eine Kommunikation mit der Teilnehmereinrichtung geplant sind, an der zweiten Zelle verfügbar sind, Mittel zum Bereitstellen einer Anforderung von der ersten Basisstation bei der zweiten Basisstation, ob die ersten Ressourcen verfügbar sind, und Empfangen einer Antwort an der ersten Basisstation, die anzeigt, dass die ersten Ressourcen verfügbar sind, umfassen, wobei die Vorrichtung Mittel zum Empfangen einer Anzeige, dass die ersten Ressourcen verfügbar sind, von der zweiten Basisstation in Reaktion auf die Anforderung umfasst, wenn die ersten Ressourcen zur Verwendung durch die zweite Zelle für einen Verkehr niedriger Priorität geplant sind.

2. Vorrichtung nach Anspruch 1, die Mittel zum Empfangen einer Mobilitätsanzeige für die Teilnehmereinrichtung an der ersten Netzwerkentität umfasst.

3. Vorrichtung nach Anspruch 2, wobei die Mobilitätsanzeige eine Anzeige von mindestens einer potenziellen Zielzelle umfasst.

4. Vorrichtung nach einem der Ansprüche 1 bis 3, wobei Mittel zum Veranlassen einer Übergabe Mittel zum Bereitstellen eines Übergabebefehls für die Teilnehmereinrichtung umfassen, wobei der Übergabebefehl eine Anzeige der ersten Ressourcen umfasst.

5. Vorrichtung nach Anspruch 1, die Mittel zum Bereitstellen einer Anzeige der ersten Ressourcen für die zweite Basisstation umfasst.

6. Vorrichtung nach einem der Ansprüche 1 bis 5, wobei die ersten Ressourcen semipersistente Planungsressourcen sind.

7. Vorrichtung nach einem der Ansprüche 1 bis 6, wobei die ersten Ressourcen Zeitdomänenressourcen umfassen.

8. Vorrichtung nach einem der Ansprüche 1 bis 7, wobei die Kommunikation mit einer Teilnehmereinrichtung einen zeitempfindlichen Vernetzungsverkehr umfasst.

9. Verfahren, das von einer ersten Netzwerkentität durchgeführt wird, wobei das Verfahren das Bestimmen, dass erste Ressourcen, die zur Verwendung durch eine erste Zelle für eine Kommunikation mit einer Teilnehmereinrichtung geplant sind, an einer zweiten Zelle verfügbar sind, bevor die Teilnehmereinrichtung mit den ersten Ressourcen ausgelegt wird, die für eine Kommunikation an der ersten Zelle verwendet werden;
Empfangen einer Anzeige zum Auslösen einer Übergabe von der ersten Zelle an die zweite Zelle von der Teilnehmereinrichtung; und
Veranlassen einer Übergabe der Teilnehmereinrichtung von der ersten Zelle an die zweite Zelle, derart, dass die zweite Zelle die ersten Ressourcen für eine Kommunikation mit der Teilnehmereinrichtung verwendet, wobei die erste Zelle eine erste Basisstation umfasst, die zweite Zelle eine zweite Basisstation umfasst und die erste Basisstation die erste Netzwerkentität umfasst, wobei das Bestimmen, dass erste Ressourcen, die zur Verwendung durch die erste Zelle für eine Kommunikation mit der Teilnehmereinrichtung geplant sind, an der zweiten Zelle verfügbar sind, das Bereitstellen einer Anforderung von der ersten Basisstation bei der zweiten Basisstation, ob die ersten Ressourcen verfügbar sind, und Empfangen einer Antwort an der ersten Basisstation, die anzeigt, dass die ersten Ressourcen verfügbar sind, umfasst, wobei das Verfahren, wenn die ersten Ressourcen zur Verwendung durch die zweite Zelle für einen Verkehr niedriger Priorität geplant sind, ferner das Empfangen einer Anzeige, dass die ersten Ressourcen verfügbar sind, von der zweiten Basisstation in Reaktion auf die Anforderung umfasst.

10. Computerlesbares Medium, das Programmanweisungen umfasst, die, wenn sie von einer Vorrichtung ausgeführt werden, die Vorrichtung veranlassen, mindestens Folgendes durchzuführen:
Bestimmen, dass erste Ressourcen, die zur Verwendung durch eine erste Zelle für eine Kommunikation mit einer Teilnehmereinrichtung geplant sind, an einer zweiten Zelle verfügbar sind, bevor die Teilnehmereinrichtung mit den ersten Ressourcen ausgelegt wird, die für eine Kommunikation an der ersten Zelle verwendet werden;
Empfangen einer Anzeige zum Auslösen einer Übergabe von der ersten Zelle an die zweite Zelle von der Teilnehmereinrichtung; und
Veranlassen einer Übergabe der Teilnehmereinrichtung von der ersten Zelle an die zweite Zelle, derart, dass die zweite Zelle die ersten Ressourcen für eine Kommunikation mit der Teilnehmereinrichtung verwendet, wobei die erste Zelle eine erste Basisstation umfasst, die zweite Zelle eine zweite Basisstation umfasst und die erste Basisstation die erste Netzwerkentität umfasst, wobei das Bestimmen, dass erste Ressourcen, die zur Verwendung durch die erste Zelle für eine Kommunikation mit der Teilnehmereinrichtung geplant sind, an der zweiten Zelle verfügbar sind, das Bereitstellen einer Anforderung von der ersten Basisstation bei der zweiten Basisstation, ob die ersten Ressourcen verfügbar sind, und Empfangen einer Antwort an der ersten Basisstation, die anzeigt, dass die ersten Ressourcen verfügbar sind, und, wenn die ersten Ressourcen zur Verwendung durch die zweite Zelle für einen Verkehr niedriger Priorität geplant sind, Empfangen einer Anzeige, dass die ersten Ressourcen verfügbar sind, von der zweiten Basisstation in Reaktion auf die Anforderung umfasst.

## Revendications

1. Appareil, ledit appareil comprenant, au niveau d'une première entité de réseau, des moyens pour déterminer que des premières ressources planifiées pour être utilisées par une première cellule pour la communication avec un équipement utilisateur sont disponibles au niveau d'une deuxième cellule avant de configurer l'équipement utilisateur avec les premières ressources utilisées pour la communication au niveau de la première cellule ;
recevoir une indication de l'équipement utilisateur pour déclencher un transfert intercellulaire de la première cellule à la deuxième cellule ; et
provoquer un transfert intercellulaire de l'équipement utilisateur de la première cellule à la deuxième cellule, de sorte que la deuxième cellule utilise les premières ressources pour la communication avec l'équipement utilisateur, dans lequel la première cellule comprend une première station de base, la deuxième cellule comprend une deuxième station de base et la première station de base comprend la première entité de réseau, dans lequel les moyens pour déterminer que des premières ressources planifiées pour être utilisées par la première cellule pour la communication avec l'équipement utilisateur sont disponibles au niveau de la deuxième cellule comprennent des moyens pour fournir une demande de la première station de base à la deuxième station de base sur la disponibilité des premières ressources, et pour recevoir une réponse au niveau de la première station de base indiquant que les premières ressources sont disponibles, l'appareil comprenant, si l'utilisation des premières ressources par la deuxième cellule est planifiée pour un trafic de moindre priorité, des moyens pour recevoir de la deuxième station de base en réponse à la demande, une indication selon laquelle les premières ressources sont disponibles.

2. Appareil selon la revendication 1, comprenant des moyens pour recevoir, au niveau de la première entité de réseau, une indication de mobilité pour l'équipement utilisateur.

3. Appareil selon la revendication 2, dans lequel l'indication de mobilité comprend une indication d'au moins une cellule cible potentielle.

4. Appareil selon l'une des revendications 1 à 3, dans lequel les moyens pour provoquer un transfert intercellulaire comprennent des moyens pour fournir une commande de transfert intercellulaire à l'équipement utilisateur, la commande de transfert intercellulaire comprenant une indication des premières ressources.

5. Appareil selon la revendication 1, comprenant des moyens pour fournir une indication des premières ressources à la deuxième station de base.

6. Appareil selon l'une des revendications 1 à 5, dans lequel les premières ressources sont des ressources planifiées de manière semi-persistante.

7. Appareil selon l'une des revendications 1 à 6, dans lequel les premières ressources comprennent des ressources du domaine temporel.

8. Appareil selon l'une des revendications 1 à 7, dans lequel la communication avec un équipement utilisateur comprend un trafic de réseau sensible au temps.

9. Procédé réalisé par une première entité de réseau, le procédé comprenant
la détermination de la disponibilité, au niveau d'une deuxième cellule, de premières ressources planifiées pour être utilisées par une première cellule pour la communication avec un équipement utilisateur avant de configurer l'équipement utilisateur avec les premières ressources utilisées pour la communication au niveau de la première cellule ;
la réception d'une indication de l'équipement utilisateur pour déclencher un transfert intercellulaire de la première cellule à la deuxième cellule ; et
la provocation d'un transfert intercellulaire de l'équipement utilisateur de la première cellule à la deuxième cellule, de sorte que la deuxième cellule utilise les premières ressources pour la communication avec l'équipement utilisateur, dans lequel la première cellule comprend une première station de base, la deuxième cellule comprend une deuxième station de base et la première station de base comprend la première entité de réseau, dans lequel la détermination de la disponibilité au niveau de la deuxième cellule de premières ressources planifiées pour être utilisées par la première cellule pour la communication avec l'équipement utilisateur comprend la fourniture d'une demande de la première station de base à la deuxième station de base sur la disponibilité des premières ressources, et la réception d'une réponse au niveau de la première station de base indiquant que les premières ressources sont disponibles, le procédé comprenant en outre, si l'utilisation des premières ressources par la deuxième cellule est planifiée pour un trafic de moindre priorité, la réception, de la deuxième station de base en réponse à la demande, d'une indication selon laquelle les premières ressources sont disponibles.

10. Support lisible par ordinateur comprenant des instructions de programme qui, lorsqu'elles sont exécutées par un appareil, amènent l'appareil à réaliser au moins ce qui suit :
déterminer que des premières ressources planifiées pour être utilisées par une première cellule pour la communication avec un équipement utilisateur sont disponibles au niveau d'une deuxième cellule avant de configurer l'équipement utilisateur avec les premières ressources utilisées pour la communication au niveau de la première cellule ;
recevoir une indication de l'équipement utilisateur pour déclencher un transfert intercellulaire de la première cellule à la deuxième cellule ; et
provoquer un transfert intercellulaire de l'équipement utilisateur de la première cellule à la deuxième cellule, de sorte que la deuxième cellule utilise les premières ressources pour la communication avec l'équipement utilisateur, dans lequel la première cellule comprend une première station de base, la deuxième cellule comprend une deuxième station de base et la première station de base comprend la première entité de réseau, dans lequel la détermination de la disponibilité au niveau de la deuxième cellule de premières ressources planifiées pour être utilisées par la première cellule pour la communication avec l'équipement utilisateur comprend la fourniture d'une demande de la première station de base à la deuxième station de base sur la disponibilité des premières ressources, et la réception d'une réponse au niveau de la première station de base indiquant que les premières ressources sont disponibles, et si l'utilisation des premières ressources par la deuxième cellule est planifiée pour un trafic de moindre priorité, la réception, de la deuxième station de base en réponse à la demande, d'une indication selon laquelle les premières ressources sont disponibles.
